(19) Europäisches Patentamt
European Patent Office
Office européen des brevets

(11) **EP 3 028 255 B1**

(12) **FASCICULE DE BREVET EUROPEEN**

(45) Date de publication et mention de la délivrance du brevet:
**19.04.2017 Bulletin 2017/16**

(21) Numéro de dépôt: **14744567.0**

(22) Date de dépôt: **29.07.2014**

(51) Int Cl.:
***G06T 7/60*** *(2017.01)*

(86) Numéro de dépôt international:
**PCT/EP2014/066289**

(87) Numéro de publication internationale:
**WO 2015/014849 (05.02.2015 Gazette 2015/05)**

(54) **DISPOSITIF D'AIDE A LA DETECTION D'OBJETS POSES SUR LE SOL A PARTIR D'IMAGES DU SOL ISSUES D'UN DISPOSITIF D'IMAGERIE PAR REFLEXION D'ONDES**

VORRICHTUNG ZUR UNTERSTÜTZUNG DER ERFASSUNG VON OBJEKTEN AUF DEM BODEN VON ANHAND EINER WELLENREFLEKTIONSBILDGEBUNGSVORRICHTUNG AUFGENOMMENEN BILDERN DES BODENS

DEVICE FOR ASSISTING IN THE DETECTION OF OBJECTS PLACED ON THE GROUND FROM IMAGES OF THE GROUND TAKEN BY A WAVE REFLECTION IMAGING DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **02.08.2013 FR 1301865**

(43) Date de publication de la demande:
**08.06.2016 Bulletin 2016/23**

(73) Titulaire: **THALES**
**92400 Courbevoie (FR)**

(72) Inventeurs:
• **FERRAND, Julien**
**F-29280 Plouzane (FR)**
• **MARCHAL, Ludovic**
**F-29200 Brest (FR)**

(74) Mandataire: **Derval, Estelle et al**
**Marks & Clerk France**
**Conseils en Propriete Industrielle**
**Immeuble Visium**
**22, avenue Aristide Briand**
**94117 Arcueil Cedex (FR)**

(56) Documents cités:
**US-A- 4 030 096      US-A- 5 937 078**
**US-A1- 2013 004 017      US-B1- 6 756 934**

**Description**

Le domaine de l'invention est celui de l'aide à la détection d'objets posés au sol sur des images du sol obtenues au moyen d'un dispositif d'imagerie par réflexion d'ondes.

Les dispositifs de détections par réflexion d'ondes sont notamment les sonars, les radars et les lidars. Un dispositif d'imagerie par réflexion d'ondes comprend un émetteur émettant des trains d'ondes c'est-à-dire des impulsions d'ondes. Les trains d'ondes ou impulsions d'ondes sont des impulsions acoustiques dans le cas des sonars, et des impulsions électromagnétiques dans le cas des radars et des lidars. L'émetteur est agencé de façon à émettre au moins une impulsion d'ondes vers une zone observée du sol avec une incidence rasante. Ces ondes sont réfléchies par le sol ou les objets posés sur le sol et le dispositif d'imagerie comprend un récepteur qui mesure les échos réfléchis par la zone irradiée.

Le sol peut être situé au dessus de la surface de l'eau dans le cas des radars et être le fond marin dans le cas des sonars.

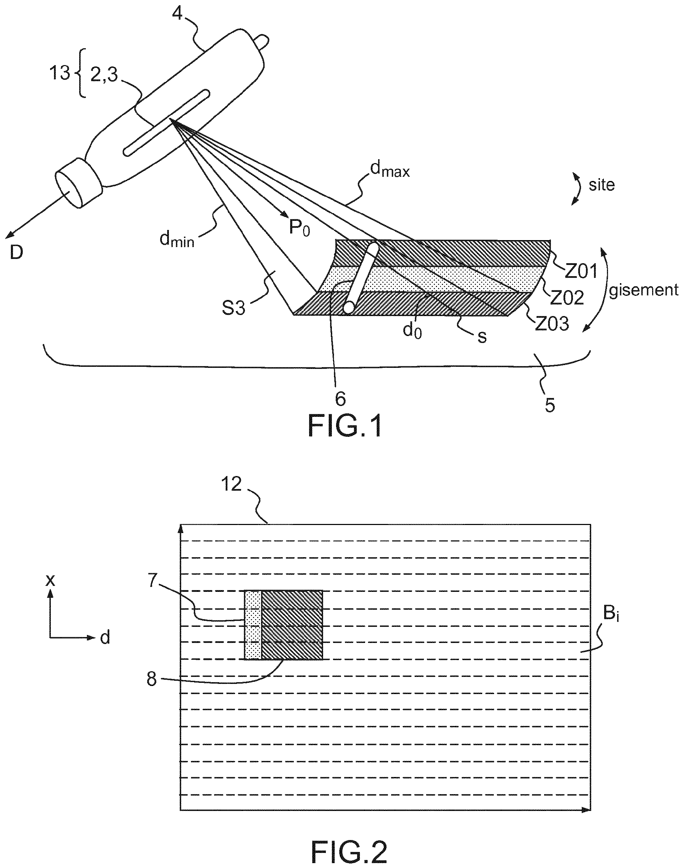

L'invention s'applique notamment à l'aide à la détection d'objets posés au sol sur des images du sol obtenues par un dispositif d'imagerie par réflexion d'ondes sur le sol à visée latérale. Un tel dispositif d'imagerie est représenté sur la figure 1. Le dispositif d'imagerie 13 comprend un émetteur et un récepteur 2, 3 montés sur un porteur 4 se déplaçant au-dessus du sol 5 selon une direction d'avancement D. Le dispositif d'imagerie 13 est monté sur le porteur 4 de façon que l'émetteur 2 et le récepteur 3 pointent, selon une direction pointée Po, dans un plan sensiblement perpendiculaire à la direction d'avancement D du porteur. C'est, par exemple, le cas des sonars latéraux montés sur un porteur se déplaçant au-dessus du fond marin et des radars à visée latérale montés sur un aéronef se déplacement au-dessus du sol.

L'émetteur 2 émet des impulsions d'ondes incidentes à intervalles de temps réguliers et le récepteur présente une directivité largement ouverte dans le plan vertical, c'est-à-dire en site et très étroite dans le plan horizontal, c'est-à-dire parallèlement à la direction d'avancement du porteur ou en gisement. Autrement dit, à chaque impulsion d'ondes émise, le récepteur forme une voie élémentaire mesurant les échos émis par une zone observée élémentaire ZOi (i=1 à 3 sur la figure 1) qui s'étend longitudinalement le long d'une direction contenue dans le même plan que la direction pointée Po latérale au porteur. L'émetteur et le récepteur occupent sensiblement la même position, appelée position du dispositif d'imagerie. Autrement dit, ils sont agencés de façon que l'émetteur puisse intercepter les trajets directs des zones observées élémentaires. Un trajet direct est une onde retour empruntant le même chemin que l'onde incidente dont elle est issue. Chaque zone observée élémentaire ZOi s'étend en largeur parallèlement à la direction d'avancement du porteur D. La zone d'observation élémentaire ZOi présente une largeur très fine selon la direction d'avancement du porteur. Chaque zone observée élémentaire ZOi est la zone du sol qui est comprise dans un secteur élémentaire d'observation Si (dont un seul S3 est représenté sur la figure 1) présentant une faible ouverture en gisement et une grande ouverture en site. Les échos recueillis suite à l'émission d'une impulsion d'ondes incidente et à la réception par une voie de réception élémentaire d'indice i représentent la réflectivité du fond le long de la bande élémentaire dans la zone observée élémentaire ZOi d'indice i.

Classiquement, les dispositifs d'aide à la détection d'objets posés au sol comprennent un dispositif d'affichage permettant d'afficher, sur un écran, une image représentant les intensités des échos générés par le sol dans une zone du sol observée au moins selon un axe des distances d représentant des distances séparant le dispositif d'imagerie d'un réflecteur. La demande de brevet américain US2013/004017 décrit un dispositif d'aide à la détection de ce type. Un exemple d'image affichée par un dispositif classique est représenté sur la figure 2. L'image 12 est constituée d'une juxtaposition de bandes élémentaires Bi aussi appelées voies élémentaires Bi. Les limites entres les différentes bandes Bi sont représentées en traits pointillés sur la figure 2 car elles ne sont pas apparentes sur les images. Chaque bande élémentaire Bi est une représentation des intensités des échos générés depuis une zone d'observation élémentaire ZOi sous l'effet de l'impulsion incidente et mesurés par la formation d'une unique voie de réception élémentaire. Elle représente la réflectivité du sol entre une distance de portée minimale dmin et une distance de portée maximale dmax du dispositif d'imagerie. Les bandes élémentaires Bi s'étendent longitudinalement selon l'axe des distances d représentatif de la distance oblique séparant le dispositif d'imagerie 2, 3 des réflecteurs ayant généré les échos dans la zone élémentaire observée ZOi lors de la formation de la voie de réception élémentaire associée. Sur la figure 1, on a représenté la distance oblique do séparant le dispositif d'imagerie 13 d'un point s du sol dans le secteur S3. L'image 12 est élaborée bande par bande avec le déplacement du véhicule. Elle est du type défilante ou en cascade ou « waterfall » en langage anglo-saxon. Chaque bande est acquise séparément par un même processus périodique consistant à émettre une impulsion d'onde et à intercepter les échos générés par cette impulsion.

Tout écho détecté dans une zone observée élémentaire ZOi se manifeste par un point brillant sur la bande élémentaire correspondante de l'image. L'absence d'écho est représentée par une zone sombre sur l'écran. Le fond de l'image est normalement d'intensité intermédiaire, puisqu'il représente la réverbération de fond mais il est représenté en blanc sur la figure 2 pour plus de clarté. Un effet très intéressant de l'émission d'impulsions d'ondes avec une incidence rasante, est celui de formation d'ombres projetées sur l'image. Un objet 6, présentant une hauteur h suffisante, posé sur le sol 5 va émettre des échos matérialisés par une zone brillante 7 sur l'écran (représentée par des points sur la figure 2). Il intercepte une partie de l'onde émise ce qui interdit la rétrodiffusion par le fond masqué par l'objet au-delà de l'objet. L'écho reçu par le récepteur va être de très faible niveau pendant une certaine durée ce qui se matérialise sur l'image par une zone sombre 8 appelée image de l'ombre projetée sur l'image par l'objet 8 (représenté en zone hachurée sur la figure 2). L'ombre 8 projetée par l'objet sur l'image peut ici être définie par l'image de la zone du sol pour laquelle l'objet 7 considéré constitue un écran empêchant son irradiation par l'impulsion d'ondes incidente. Ce phénomène est d'un grand intérêt pour toutes les applications de détection et de classification d'objets posés sur le fond. Il permet de repérer un objet remarquable non pas par l'écho qu'il réfléchit mais par l'ombre qu'il génère sur l'image. La détection sur ombre est particulièrement avantageuse pour repérer certains objets, certaines mines sous-marines furtives ou avions furtifs en particulier, qui réfléchissent peu ou pas l'onde mais qui font néanmoins écran et produisent de ce fait une ombre. Or, un inconvénient de la détection par ombres est que les tailles des ombres sur les images, sont très variables en fonction notamment de la géographie de la zone observée et de la position du dispositif d'imagerie par rapport à la zone observée. Autrement dit, la variation de la taille de l'ombre d'un objet remarquable présentant des dimensions connues en fonction de sa position sur une image n'est pas facilement prévisible par un opérateur qui rencontre un certain nombre difficultés pour détecter un objet remarquable sur une image. Par détecter un objet remarquable sur une image, on entend identifier sur l'image une position à laquelle se trouve l'image d'un objet présentant les dimensions de l'objet remarquable.

Il existe des solutions pour aider un opérateur à détecter un objet remarquable sur un écran. Un premier type de solution consiste en un outil permettant à l'opérateur de sélectionner l'image d'un objet remarquable sur l'écran et de pointer des limites de l'image de cet objet ou de l'image de son ombre sur l'écran. Un calculateur évalue ensuite les dimensions de l'objet remarquable associé notamment en fonction des limites pointées, de la résolution de l'image et de la position de cette ombre sur l'écran. Cette solution présente l'inconvénient d'être très fastidieuse pour l'opérateur et très longue à mettre en oeuvre puisque chaque objet apparaissant sur l'image doit être pointé et sa taille doit ensuite être évaluée.

Une autre solution consiste à mettre en oeuvre des algorithmes de traitement d'image qui vont détecter les contours des images des ombres projetées par les objets et évaluer les dimensions de l'objet associé. Toutefois, cette solution montre des performances assez faibles en probabilité de détection des images des ombres sur l'écran et des taux de fausse alarme élevés pour la détection des objets remarquables (c'est-à-dire pour l'association des ombres détectés aux objets remarquables recherchés). En effet, dés lors que le sol est déformé ou que l'image est polluée par des échos provenant de trajets multiples (générés par une faible hauteur d'eau), les ombres sont déformées ou peu contrastées. Ces ombres sont alors mal détectées ou leurs dimensions sont mal évaluées par ces algorithmes de détection automatiques.

Le brevet US 6 756 934 décrit un dispositif utilisant un système radar pour authentification de l'ombre d'un objet recherché comprenant un radar pour obtenir une image radar contenant l'objet recherché et son ombre supposée, un ordinateur pour extraire une surface pentagonale adjacente à l'image radar et pour vérifier si l'ombre supposée correspond bien à l'objet recherché.

Le but de l'invention est de pallier les inconvénients précités.

A cet effet, l'invention a pour objet un dispositif d'aide à la détection d'un objet recherché sur le sol, ledit objet ayant une première hauteur h prédéterminée, ledit dispositif comprenant :

-    un dispositif d'affichage configuré pour afficher une image sur un écran, l'image étant générée à partir d'échos mesurés par un dispositif d'imagerie par réflexion d'ondes, l'image représentant des intensités d'échos générés par une zone observée du sol sous l'effet de l'émission d'au moins une impulsion d'ondes vers la zone observée du sol, l'image s'étendant au moins selon un axe des distances représentant les distances obliques séparant le dispositif d'imagerie réflexion d'ondes de réflecteurs ayant généré les échos dans la zone observée élémentaire, l'image présentant une résolution p en distance prédéterminée, le dispositif d'affichage permettant d'afficher un curseur superposé à ladite image sur ledit écran, ledit curseur permettant de pointer au moins une position pointée sur l'image,
-    une interface homme-machine comprenant un pointeur permettant à un opérateur de déplacer le curseur sur l'image au moins le long de l'axe des distances,
-    un module de calcul configuré pour déterminer une longueur attendue, le long de l'axe des distances, d'une ombre attendue projetée sur l'image par l'objet recherché en considérant que l'objet recherché est positionné à une position pointée au sol correspondant à la position de la zone observée associée à la position pointée par le curseur, le curseur comprenant au moins un gabarit de l'ombre attendue, le gabarit étant dimensionné et agencé de façon à permettre à un opérateur de vérifier qu'une ombre projetée sur l'image dans le voisinage de la position pointée présente la longueur attendue selon l'axe des distances.

Avantageusement, la longueur attendue est calculée à partir de la première hauteur, à partir d'une distance oblique séparant le sonar de la position pointée au sol et d'une deuxième hauteur dépendant d'une altitude du dispositif d'imagerie au-dessus du sol.

Dans un premier mode de réalisation, la deuxième hauteur est une altitude du dispositif d'imagerie au-dessus du sol.

La deuxième hauteur peut être fixe.

Avantageusement, la deuxième hauteur dépend en outre d'une différence d'altitude entre la zone du sol située à l'aplomb du dispositif d'imagerie et la position pointée au sol.

Avantageusement, la longueur attendue w est en outre déterminée à partir d'une pente du sol b dans le voisinage de la position pointée au sol.

La longueur attendue peut être déterminée à partir de l'équation suivante :

$$w = \frac{h\rho}{\sin(\alpha - b)}$$

où $\alpha = \arcsin(\frac{H}{r})$ et où p est la résolution de l'image en distance, H est la deuxième hauteur et r est la distance oblique séparant le dispositif d'imagerie et la position pointée au sol.

Avantageusement, le dispositif d'affichage permet de représenter le gabarit par une première forme dans laquelle le gabarit comprend un contour délimitant une zone présentant une longueur sensiblement égale à la longueur attendue selon l'axe des distances.

Avantageusement, le dispositif d'affichage permet de représenter le gabarit selon un premier agencement dans lequel le gabarit est centré sur la position pointée selon l'axe des distances.

Avantageusement, le dispositif d'affichage permet de représenter le gabarit selon un deuxième agencement dans lequel une extrémité du gabarit selon l'axe des distances coïncide avec la position pointée.

Avantageusement, lequel le contour est fermé.

En variante, l'image s'étend selon un premier axe et selon l'axe des distances, le dispositif d'affichage permet de représenter le gabarit selon un mode dans lequel le curseur pointe une pluralité de positions pointées, l'ensemble des positions pointées étant réparties sur une ligne parallèle au premier axe, appelée ligne pointée, le module de calcul déterminant la longueur attendue auxdites positions pointées, le gabarit comprenant un contour, le contour comprenant une première ligne parallèle à la ligne pointée, le contour comprenant une deuxième ligne, la distance entre la première et l deuxième lignes selon l'axe des distances étant variable et égale, aux coordonnées des positions pointées respectives selon le premier axe, aux longueurs attendues calculées pour les positions pointées respectives.

Dans un premier mode de réalisation, l'image est réalisée à partir de mesures issues d'un dispositif d'imagerie par réflexion d'ondes à visée latérale monté sur un porteur, l'image comprenant une juxtaposition de bandes élémentaires représentant des échos issus de zones observées élémentaires mesurées par formation de voies de réception élémentaires respectives, les échos étant générés sous l'effet d'émissions d'impulsions d'ondes successives pendant l'avancement du porteur.

En variante, l'image est réalisée à partir de mesures issues d'un dispositif d'imagerie par réflexion d'ondes de type volumique, l'image comprenant une juxtaposition de bandes élémentaires représentant des échos issus de zones observées élémentaires mesurées par formation de voies de réception élémentaires respectives, les échos étant générés sous l'effet de l'émission d'une impulsion d'ondes.

L'invention a également pour objet un dispositif pour détecter des objets au sol comprenant un dispositif d'imagerie par réflexion d'ondes et un dispositif d'aide à la détection selon l'invention.

D'autres caractéristiques et avantages de l'invention apparaîtront à la lecture de la description détaillée qui suit, faite à titre d'exemple non limitatif et en référence aux dessins annexés dans lesquels :

- la figure 1 déjà décrite représente schématiquement une vue en perspective d'un sonar à visée latérale et d'un secteur élémentaire d'observation associé,
- la figure 2 représenté schématiquement un exemple d'image obtenue à partir de mesures issues d'un sonar à visée latérale tel que représenté sur la figure 1,
- la figure 3 représente un schéma synoptique d'un dispositif d'aide à la détection selon l'invention,
- la figure 4 représente schématiquement un premier exemple d'image à laquelle est superposé un curseur présentant une première forme, un premier agencement et pointant vers une première position pointée,
- la figure 5 représente une schématiquement une vue en perspective d'une situation de détection ayant permis d'obtenir l'image de la figure 4,
- la figure 6 représente l'image de la figure 4 à laquelle est superposé un curseur comprenant un gabarit présentant une première forme, un premier agencement et pointant vers une deuxième position pointée,
- la figure 7 représente schématiquement les variables utilisées pour calculer la longueur attendue,

- la figure 8 représente schématiquement une vue en perspective d'une situation de détection dans laquelle le sol n'est pas plat,
- la figure 9 représente un deuxième exemple d'image dans laquelle le curseur comprend deux gabarits présentant la première forme et un deuxième agencement,
- la figure 10 représente le deuxième exemple d'image, dans laquelle le curseur comprend un gabarit présentant une deuxième forme
- la figure 11 représente un exemple d'une forme d'image obtenue à partir de l'émission d'une impulsion unique d'un dispositif d'imagerie de type volumique.

D'une figure à l'autre, les mêmes éléments sont repérés par les mêmes références.

L'invention se rapporte à un dispositif d'aide à la détection d'objets posés sur le sol par un opérateur.

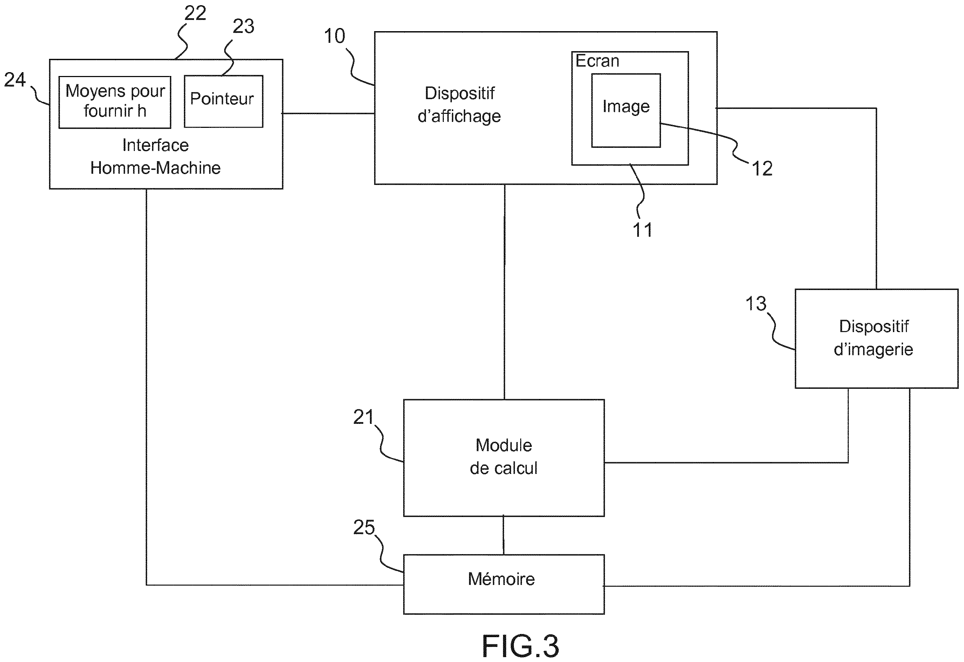

Comme visible sur la figure 3, le dispositif selon l'invention comprend un dispositif d'affichage 10 configuré pour afficher sur un écran 11, une image 12 issue d'échos mesurés par un dispositif d'imagerie 13 par réflexion d'ondes sous l'effet de l'émission d'au moins une impulsion d'ondes vers une zone observée du sol. Le dispositif d'affichage peut être apte à générer l'image. En variante, c'est le dispositif d'imagerie qui génère l'image et la transmet au dispositif d'affichage 10 pour qu'il réalise l'affichage sur l'écran 11. Le dispositif d'aide à la détection d'objets peut comprendre, mais pas obligatoirement, le dispositif d'imagerie 13.

Le dispositif d'imagerie par réflexion d'ondes 13 peut être comme dit précédemment, un sonar, un radar, ou un lidar. Il comprend un émetteur apte à émettre au moins une impulsion d'ondes avec une incidence rasante vers une zone observée au sol et un récepteur apte à mesurer les échos issus de la zone observée ayant été générés sous l'effet de cette de l'impulsion d'ondes en formant au moins une voie de réception.

L'image 12 représente des intensités d'échos générés par la zone observée du sol. Elle s'étend au moins selon un axe des distances comme décrit précédemment. Elle comprend une juxtaposition de bandes élémentaires Bi telles que décrites précédemment.

Le dispositif d'imagerie 13 peut être un dispositif d'émission à visée latérale tel que représenté sur la figure 1, monté sur un porteur mobile de façon à irradier le sol. Dans ce cas, les échos sont acquis, comme expliqué précédemment, par des émissions d'impulsions d'ondes successives vers le sol. Après chaque émission, le récepteur reçoit les échos résultant de l'impulsion d'ondes et étant issus d'une zone observée élémentaire ZOi du sol correspondant à une bande du sol s'étendant latéralement par rapport au porteur, par exemple, perpendiculairement par rapport à l'axe du porteur. Si le dispositif d'imagerie avance à une vitesse constante selon une trajectoire rectiligne et que les impulsions d'ondes sont émises à des intervalles de temps réguliers par le sonar, les bandes Bi présentent une largeur constante le premier axe x est assimilable à un axe temporel ou à un deuxième axe des distances parallèlement à la direction d'avancement du porteur par rapport à un point de référence. En variante, la vitesse du dispositif d'imagerie n'est pas constante et/ou la trajectoire du dispositif d'imagerie n'est pas rectiligne alors la largeur des bandes peut être variable et/ou les directions longitudinales des bandes ne sont pas parallèles mais s'étendent chacune longitudinalement selon leur axe des distances propre. Avantageusement, le dispositif d'affichage comprend un système de stabilisation des voies qui génère à l'écran des bandes parallèles de largeur fixe, le premier axe x est alors également assimilable à un axe temporel.

Dans la suite du texte, pour plus de clarté nous décrirons l'invention lorsque le dispositif d'imagerie 13 est du type à visée latérale mais nous verrons qu'elle s'applique à d'autres types de dispositifs de détection.

L'image 12 présente une résolution p prédéterminée en distance selon l'axe des distances, c'est-à-dire dans le sens de la longueur des bandes Bi. La résolution p (exprimée en mètres par pixels) correspond à un nombre de mètres représentés par pixels sur l'image selon l'axe des distances.

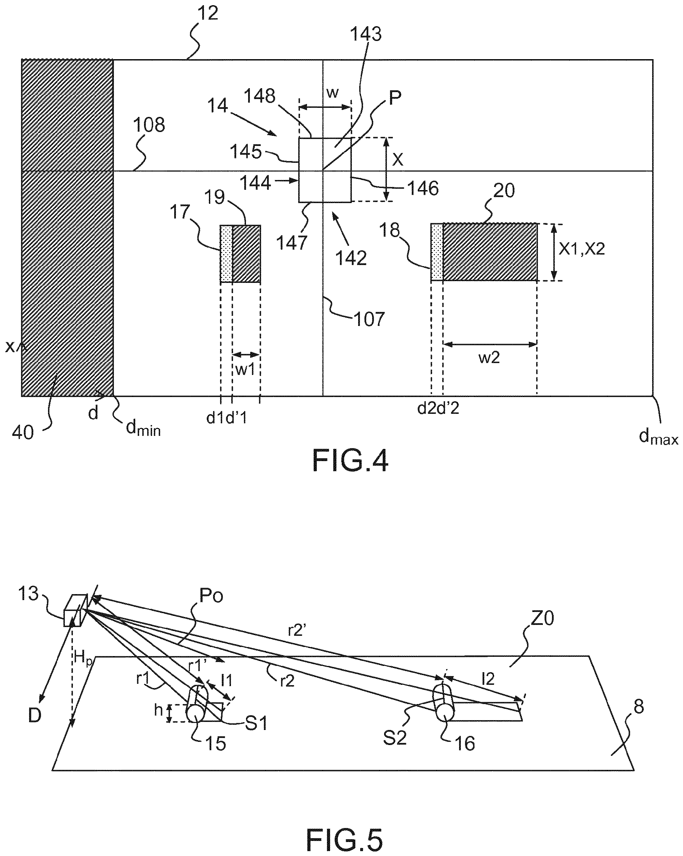

Sur la figure 4, on a représenté un exemple d'image 12 affichée en mode temps-distance sur l'écran 11 représentant une situation telle que visible sur la figure 5. Le dispositif d'affichage 10 permet d'afficher sur l'écran 11 un curseur 14 superposé à l'image 12. Le curseur 14 permet de pointer au moins une position pointée P sur l'image. Une position pointée est définie par ses coordonnées selon les axes x et d. Le curseur 14 comprend un ensemble d'éléments solidaires les uns des autres, qui se déplacent ensembles. Comme visible sur la figure 3, le dispositif comprend une interface homme-machine 22 comprenant un pointeur 23 permettant à un opérateur de déplacer le curseur 14 sur l'écran au moins le long de l'axe des distances d et, éventuellement, aussi selon le premier axe x de façon à déplacer la position pointée P. Le pointeur est par exemple, une souris, un ensemble de touches ou tout autre moyen connu de l'homme du métier permettant de déplacer un curseur sur un écran.

Sur la figure 5, on a représenté schématiquement un exemple de configuration d'un dispositif d'imagerie à balayage latéral 13 se déplaçant au-dessus d'un fond marin 8 (ou sol) plat à une hauteur, appelée hauteur du porteur Hp, au-dessus du fond plat. Deux objets 15, 16 de mêmes dimensions et notamment de même hauteur h, appelée première hauteur, sont situés à des distances obliques r1 et r2 du dispositif d'imagerie 13. Les distances obliques r1', r2' sont les distances obliques reliant le sonar 13 aux sommets S1, S2 des objets 15, 16. Comme représenté sur la figure 5, les images 17, 18 des objets 15, 16 sont donc visibles sur l'image 12 entre les distances d1 et d'1, et respectivement d2 et d'2 égales respectivement à r1*ρ, r1'*ρ, r2*ρ et r2'*ρ. Les longueurs w1, w2 ombres 19, 20 projetées par les objets 15, 16 sont respectivement égales à l1\*ρ et l2\*ρ. l1 et l2 sont les distances entre le sommet des objets correspondant 15, 16 et le fond marin 8 le long d'une droite reliant le sonar et le sommet de l'objet. Sur l'image 12, les objets s'étendent parallèlement à la direction d'avancement D, occupent une même position parallèlement à la direction D, et sont espacés perpendiculairement à la direction D dans un plan contenant la direction pointée Po. Les ombres 19, 20 projetées sur l'image 12 ont donc des formes sensiblement rectangulaires de longueurs w1 et w2. Les ombres présentent la même largeur X1, X2 selon le premier axe x. La longueur w2 de l'ombre projetée 20 par le deuxième objet 16 est plus grande que la longueur w1 de l'ombre 19, projetée par le premier objet 15. Autrement dit, la longueur de l'ombre projetée par un même objet sur l'image varie notamment en fonction de la distance oblique entre le sonar et l'objet, c'est-à-dire de la position de son image le long de l'axe des distances. La zone hachurée 40 visible à gauche sur la figure 4 représente l'absence d'échos émis le volume d'eau situé entre dispositif d'imagerie à balayage latéral 13 et le fond marin 8.

Le dispositif selon l'invention comprend un module de calcul 21 configuré pour déterminer une longueur attendue w, le long de l'axe des distances, d'une ombre projetée par un objet recherché prédéterminé présentant une première hauteur h prédéterminée, positionné en une position pointée au sol PS correspondant à la position appartenant à la zone observée qui est associée à la position P pointée par le curseur 14 sur l'image. La première hauteur est la dimension de l'objet selon un axe vertical défini dans un référentiel terrestre. La position pointée au sol PS est définie au moins par la distance oblique qui la sépare du dispositif d'imagerie correspondant à la coordonnée de la position pointée P sur l'image. La position pointée au sol est une position géographique dans un référentiel terrestre.

Le curseur 14 comprend un gabarit 142 de l'ombre projetée sur l'image par ledit objet recherché. Le gabarit est dimensionné et agencé de façon à permettre à un opérateur de vérifier qu'une ombre projetée sur l'image dans le voisinage de la position pointée présente la longueur attendue selon l'axe des distances. Par gabarit, on entend un modèle, une forme dont les dimensions sont déterminées de façon à permettre de vérifier les dimensions de l'ombre sur l'image 12, au moins le long de l'axe des distances. Le gabarit est avantageusement dimensionné et agencé de façon à permettre à un opérateur de vérifier qu'une ombre projetée sur l'image dans le voisinage de la position pointée, au moins à la coordonnée de la direction pointée selon le premier axe présente la longueur attendue selon l'axe des distances. Avantageusement, le gabarit 142 présente une taille sensiblement égale à la longueur attendue le long de l'axe des distances, au moins à la coordonnée de la position pointée selon le premier axe.

La longueur attendue, est calculée de manière dynamique en fonction de la position P pointée par le curseur. Autrement dit, lorsqu'un opérateur déplace le curseur sur l'image, la longueur du gabarit s'adapte automatiquement à la position pointée par le curseur, et plus particulièrement à la longueur que devrait avoir l'ombre projetée par l'objet recherché s'il était positionné à la position au sol PS associée à la position pointée P par le curseur.

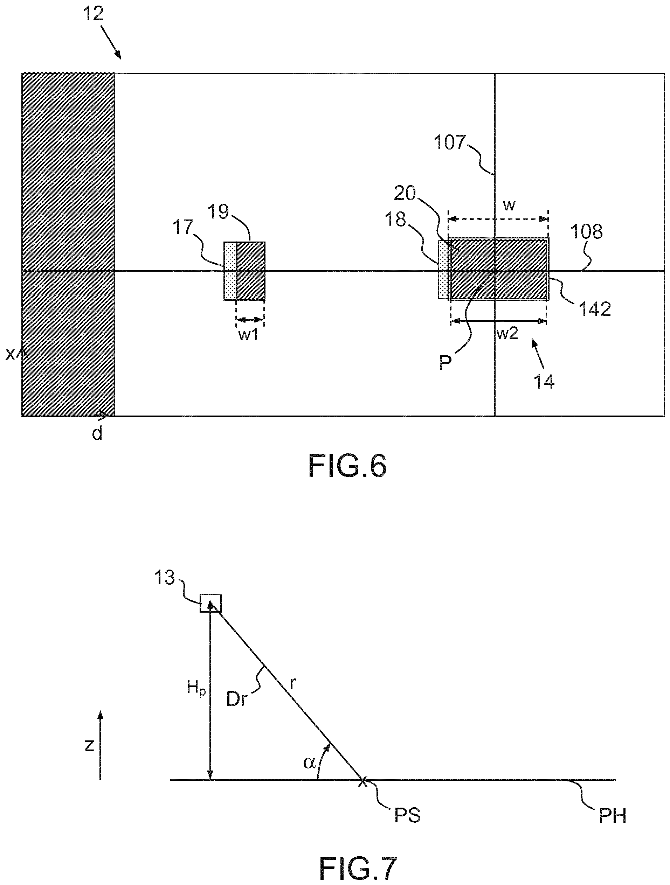

Par conséquent, lorsqu'un opérateur déplace le curseur 14 sur l'image 12, le module de calcul 21 calcule la longueur attendue, et le dispositif d'affichage 10 affiche un gabarit 142 dimensionné et agencé de façon à permettre à un opérateur de vérifier qu'une ombre projetée sur l'image dans le voisinage de la position pointée présente la longueur attendue selon l'axe des distances. En pointant le curseur 14 vers une ombre projetée sur l'écran, la taille du gabarit s'adapte automatiquement à la taille de l'ombre qui serait projetée sur l'image par un objet recherché de hauteur h prédéterminée. Par ailleurs, le gabarit 142 étant une partie du curseur, il se déplace avec la position pointée P. Si l'ombre visible sur l'image présente la même longueur que celle du gabarit, l'opérateur sait instantanément, sans faire de calcul qu'elle est représentative de l'objet recherché. Si la longueur d'une ombre visible sur l'image au niveau du curseur est très différente de la longueur du gabarit, l'opérateur sait instantanément que l'ombre n'est pas issue de l'objet recherchée. Par conséquent, l'opérateur sait instantanément que toute ombre visible sur l'image sur laquelle il pointe le curseur et qui présente une longueur sensiblement égale à celle du gabarit est une ombre générée par un objet de taille sensiblement égale à celle de l'objet recherché, et ce, quelle que soit la position du curseur sur l'écran. Ceci est représenté sur la figure 6, sur laquelle on a représenté la même image 12 que sur la figure 4 mais sur laquelle le curseur 14 a été déplacé de manière à pointer une position pointée P située au centre de l'ombre 20. Sur cette figure, l'opérateur sait instantanément que l'ombre 20 correspond à l'objet recherché car la longueur w2 de l'ombre 20 selon l'axe des distances d est sensiblement égale à la longueur w du gabarit 142. La solution proposée permet de limiter considérablement le nombre de fausses alarmes lors de l'étape de détection. Elle permet également de faciliter considérablement le travail de détection. Il suffit à l'opérateur de transmettre la première hauteur h correspondant à la hauteur de l'objet recherché au module de calcul 21 via l'interface homme-machine 22, de pointer une ombre au moyen du curseur et de vérifier visuellement si l'ombre à une longueur proche de celle du gabarit. Autrement dit, la solution proposée permet de ne détecter que les contacts dont la taille est compatible de l'objet, ou de la menace, recherchée par une simple action de pointage et d'analyse visuelle de la part de l'opérateur qui n'a pas à réaliser de calculs ou d'estimations. La solution proposée permet donc de réduire de manière très significative, la charge de travail de l'opérateur, le temps d'analyse de l'image et la durée de l'étape de détection sur l'image. Elle permet également de réduire de manière très significative le taux de fausses alarmes, c'est-à-dire la détection, par l'opérateur, de contacts ne correspondant pas à l'objet recherché.

La longueur attendue w est calculée à partir de la première hauteur h de l'objet recherché. L'interface homme-machine 22 comprend des moyens 24 permettant à un opérateur de fournir la première hauteur h au module de calcul 21. La longueur attendue w est également calculée à partir de la distance oblique r séparant un objet au sol situé à la position pointée au sol PS correspondant à la position pointée P, et d'une deuxième hauteur H dépendant d'une altitude Hp du dispositif d'imagerie 13 au-dessus du sol. Cette altitude Hp est la distance entre le dispositif d'imagerie et la zone du sol située à l'aplomb du dispositif d'imagerie, selon l'axe vertical z.

La longueur w du gabarit est alors représentative de la longueur de l'ombre projetée sur l'image 12 par un objet présentant une première hauteur h disposé à la position du sol correspondant à la position P pointée sur l'image lorsque le dispositif d'imagerie 13 se trouve à une altitude donnée au-dessus du sol. Cette méthode de calcul permet de tenir compte de la hauteur de l'objet recherché et du positionnement relatif entre le dispositif d'imagerie et le sol. Elle permet d'obtenir la longueur attendue avec une bonne fiabilité.

La longueur attendue w peut être calculée de la manière suivante en une position P pointée sur l'image 12 associée à une position PS pointée au sol :

$$w = \frac{h\rho r}{H} \qquad [1]$$

Les différentes variables de l'équation [1] sont représentées sur la figure 7 sauf la première hauteur h qui est représentée sur la figure 5. h est la première hauteur de l'objet recherché selon un axe vertical z dans un référentiel terrestre. La hauteur est exprimée en mètres.

$\rho$, exprimée en mètres par pixels, est la résolution de l'image selon l'axe des distances d. La résolution p peut être transmise au calculateur par le dispositif d'affichage 10 ou peut être rentrée dans une mémoire 25 par un opérateur au moyen de moyens de saisie 24 de l'interface homme-machine 22.

La distance oblique r peut aussi être calculée par le module de calcul 21 en fonction de la coordonnée de la position pointée selon l'axe des distances et de la résolution p.

La deuxième hauteur peut être égale à une altitude Hp. Dans ce cas, la deuxième hauteur H peut être fixe, c'est-à-dire indépendante de la position pointée sur l'image. C'est par exemple le cas si on considère que le porteur est situé à une altitude Hp constante au dessus du sol qui est considéré comme étant plat. Cette altitude Hp est transmise au module de calcul 21 comme donnée d'entrée, par exemple, par le dispositif d'imagerie 13 ou par un opérateur, par l'intermédiaire de l'interface homme-machine 22. C'est par exemple une consigne d'altitude du porteur au-dessus du sol qui est donnée au porteur lors de l'acquisition des données.

En variante, la deuxième hauteur H dépend de la position pointée P par le curseur 14 sur l'image 12. Cette configuration permet de calculer des longueurs attendues plus précises et de réduire le taux de fausses alarmes lors de l'étape de détection par l'opérateur. Elle peut être égale à une hauteur du dispositif d'imagerie 13 Hp au-dessus du sol sensiblement à l'instant d'émission. Cette hauteur Hp peut être une mesure ou une consigne. La deuxième hauteur H peut dépendre de l'altitude Hp et d'une différence d'altitude entre la zone du sol située à l'aplomb du dispositif d'imagerie et la position pointée au sol PS à l'instant d'émission de l'impulsion d'ondes à l'origine de l'écho provenant de la position pointée au sol PS. La deuxème hauteur H est de préférence sensiblement égale à une différence d'altitude séparant le dispositif d'imagerie et la position pointée au sol PS, c'est-à-dire de la distance séparant selon l'axe vertical la position pointée au sol PS du dispositif d'imagerie. Cette différence d'altitude est de préférence prise sensiblement à l'instant d'émission correspondant. C'est ce calcul qui donne la meilleure fiabilité. Le dispositif d'imagerie 13 comprend avantageusement un capteur d'altitude permettant de déterminer l'altitude du dispositif d'imagerie Hp aux différents instants d'émission et de la stocker dans la mémoire 25. En variante, le dispositif d'imagerie comprend un deuxième module permettant de calculer l'altitude Hp du dispositif d'imagerie à partir d'une profondeur du fond marin, de la longueur du câble entre le porteur et un bâtiment de surface remorquant le porteur aux différents instants d'acquisition et à partir de la vitesse du bâtiment de surface. Dans le cas où la deuxième hauteur H est la distance séparant, selon l'axe vertical, le point PS du dispositif d'imagerie 13 à l'instant d'émission correspondant, le module de calcul 21 doit pouvoir calculer cette deuxième hauteur aux différents instants d'acquisition. Elle est par exemple calculée à partir d'une carte bathymétrique du sol, de la position absolue du sonar, dans un référentiel terrestre, aux différents instants d'émission, de l'altitude du dispositif d'imagerie 13 Hp aux différents instants d'émission et de la direction pointée Po. Le dispositif d'imagerie 13 comprend avantageusement des capteurs de position permettant de déterminer la position absolue du dispositif d'imagerie 13 aux différents instants d'émission et l'altitude Hp du dispositif d'imagerie 13 aux différents instants d'émission et de les stocker dans la mémoire 25. Une carte bathymétrique du sol est avantageusement stockée dans la mémoire 25. En variante, la distance séparant, selon l'axe vertical, le point PS du dispositif d'imagerie 13 à l'instant d'émission correspondant, est calculée par interférométrie.

Avantageusement, la longueur attendue w est en outre calculée à partir d'une pente du sol au voisinage de la position pointée au sol PS. En effet, la taille de l'image de l'ombre projetée par un objet de taille déterminée sur l'image dépend très fortement de cette pente. Si la pente est montante, la taille de l'ombre sera plus faible que si la pente est descendante.

La longueur w du gabarit est alors calculée de la manière suivante :

$$w = \frac{h\rho}{\sin(\alpha - b)} \qquad [2]$$

L'angle de pente b est l'angle orienté de la pente du sol au voisinage de la position pointée au sol PS.C'est l'angle formé depuis un plan horizontal passant par la position pointée au sol PS, jusqu'à une droite tangente au sol compté positif lorsqu'il est dans le sens horaire. Cet angle est avantageusement l'angle de la pente du sol au voisinage de la position pointée au sol PS dans la direction opposée au dispositif d'imagerie à l'instant d'émission de l'impulsion d'ondes incidente à l'origine de l'écho mesuré par le dispositif d'imagerie et étant issu pour la position pointée au sol PS. L'angle de rasance α est calculé par la formule suivante :

$$\alpha = \arcsin(\frac{H}{r}) \qquad [3]$$

b et α sont exprimés en radian.

α est l'angle de rasance de l'objet situé à la position pointé PS, c'est-à-dire l'angle orienté formé depuis un plan horizontal PH, dans un référentiel terrestre, passant par la position pointée au sol PS (ce plan est perpendiculaire au plan de la feuille sur la figure 6) jusqu'à une droite Dr reliant la position au sol PS et le dispositif d'imagerie 13. Cet angle est de préférence mesuré sensiblement à l'instant d'émission de l'impulsion d'ondes à l'origine des échos mesurées pour la zone élémentaire observée dans laquelle se trouve la position au sol PS. Autrement dit, cet instant d'émission est l'instant d'émission de l'impulsion incidente à l'origine d'un écho provenant de la position pointée au sol PS.

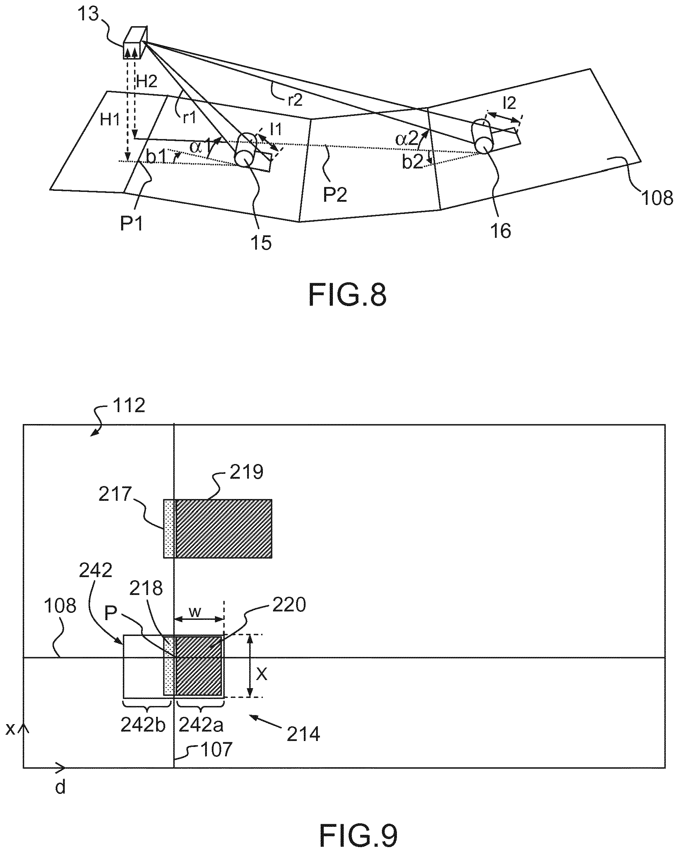

Sur la figure 8, on a représenté les premier et deuxième angles de pente b1 et b2 pour deux objets 15, 16 posés sur un fond 108 incliné ainsi que les angles de rasance associés $\alpha_1$ et $\alpha_2$ et les premier et deuxième plans horizontaux P1 et P2 passant par les objets 15, 16.

L'angle de pente b pour une position pointée au sol PS est, par exemple, calculé par le module de calcul 21 au moyen d'une carte bathymétrique.

Comme visible sur les figures 4 et 6, le curseur 14 comprend un symbole de pointage 107, 108 symbolisant la position pointée P par le curseur 14. Ce symbole de pointage comprend sur l'exemple non limitatif de la figure 8, une première ligne de pointage 107 parallèle au premier axe x, et une deuxième ligne de pointage 108 parallèle à l'axe de distances d. Le point d'intersection entre les lignes de pointage 107, 108 étant la position pointée P.

Sur l'exemple des figures 4 et 6, le gabarit 142 présente une première forme dans laquelle il comprend un contour 144 délimitant une zone 143 présentant la longueur attendue, selon l'axe des distances. Autrement dit, le gabarit présente sensiblement la longueur attendue, à l'épaisseur du contour près. La zone 143 délimitée par le contour 144 est l'ombre attendue qui serait projetée sur l'image par un objet, présentant une hauteur égale à l'objet recherché, et qui serait positionné à la position pointée au sol PS associée à la position pointée P par le curseur.

Comme visible sur la figure 4, le gabarit 142 comprend des premières limites délimitant l'ombre attendue selon l'axe de distances. Les premières limites comprennent une première ligne 145 et une deuxième ligne 146 délimitant l'ombre attendue 143 selon l'axe des distances. Les lignes 145, 146 sont parallèles au premier axe séparées l'une de l'autre par une distance fixe, selon l'axe des distances, correspondant sensiblement à la longueur attendue w. Dans le cas du dispositif d'imagerie à visée latérale, le premier axe x1 est un segment de droite, les lignes 145, 146 sont des segments de droites parallèles au premier axe x1. Sur la réalisation de la figure 4, le contour 144 est un contour fermé comprenant des deuxièmes limites délimitant l'ombre attendue 143 de l'ombre selon le premier axe x. Les deuxièmes limites comprennent une troisième ligne 147, et une quatrième ligne 148 parallèles à l'axe des distances d et délimitant l'ombre attendue 143 de l'ombre selon le premier axe x. Sur la réalisation de la figure 4, les lignes 147, 148 sont parallèles à l'axe des distances et séparées l'une de l'autre par une distance X correspondant à la largeur du gabarit 142 à l'épaisseur du contour près. Le contour 144 est rectangulaire. La largeur X du gabarit est prédéterminée. Elle est fournie comme donnée d'entrée au module de calcul 21, par exemple au moyen de l'interface homme-machine. Elle correspond avantageusement à une taille maximale que peut présenter, sur l'image l'ombre de l'objet recherché selon le premier axe.

Sur la réalisation des figures 4 et 6, l'agencement du gabarit est du type centré. Le gabarit est centré sur la position pointée P. Autrement dit, la position pointée est située au centre du gabarit au moins selon l'axe des distances, c'est-à-dire dans le sens de la longueur des bandes Bi. Autrement dit, les extrémités du gabarit selon l'axe des distances sont situées à la même distance l'une et l'autre de la position pointée P, selon l'axe des distances et, éventuellement, selon le premier axe comme visible sur la figure 6. Les extrémités du gabarit 142 selon l'axe des distances sont les lignes 145 et 146 sur la figure 8. Un opérateur identifie facilement si une ombre est issue de l'objet recherché en pointant au centre de cette image comme visible sur la figure 4. L'image de l'ombre est issue d'un objet présentant une même hauteur que l'objet recherché si elle s'étend au sein du contour et si la taille de l'ombre, au moins selon l'axe x, est sensiblement égale à la longueur du gabarit 142 ou à la taille de la zone 143.

Sur la figure 9, on a représenté une autre image 112 à laquelle est superposée un autre type de curseur 214 comprenant un gabarit 242 agencé différemment. Sur cette figure, deux ombres 219 et 220 et images 217, 218 d'objets associés sont représentées dans une configuration différente de celle des figures 4 à 6.Sur cette figure, le curseur 242 comprend deux gabarits 242a, 242b présentant une longueur sensiblement égale à w. Les gabarits 242a, 242b sont situés de part et d'autre de la position pointée P. Ils présentent la même forme que le gabarit de la figure 4. L'agencement des gabarits 242a, 242b est du type décentré selon l'axe des distances d. Chaque gabarit est agencé de façon que la position pointée P est située à une extrémité de chacun des gabarits selon l'axe des distances. Cet agencement permet à l'opérateur d'évaluer si l'image d'une ombre 219, 220 est issue d'un objet présentant la même hauteur que l'objet recherché en pointant la limite entre l'image d'un objet (écho brillant) 217, 218 et l'ombre associée 219, 220. Sur cette figure, les gabarits sont centrés sur la position pointée selon le premier axe. Une variante d'un agencement décentré est une variante dans laquelle le curseur comprend un unique gabarit décentré.

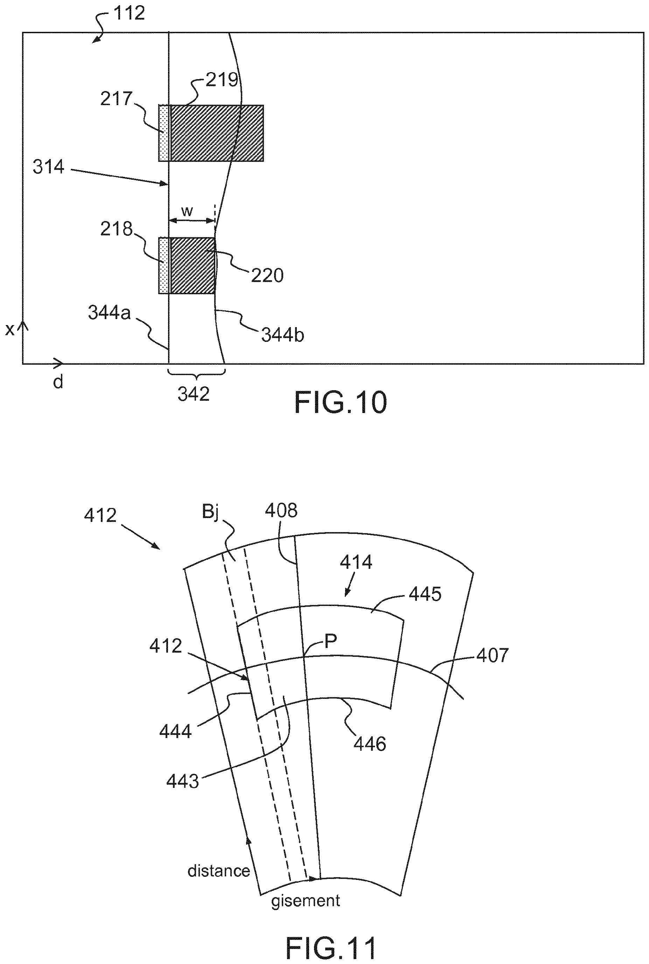

Sur la figure 10, on a représenté un autre type de curseur 314. L'agencement du gabarit 342 est du type décentré selon l'axe des distances d. Le gabarit 342 est agencé de façon que la position pointée P est située à une extrémité du gabarit 342 selon l'axe des distances. Sur la réalisation de la figure 10, le gabarit 342 comprend un contour ouvert formé par deux lignes 344a, 344b. Le curseur 314 pointe une pluralité de positions pointées sur l'image 112 réparties une ligne droite, dite ligne pointée, parallèle au premier axe x, et s'étendant ici, mais non nécessairement, tout le long de l'image. Cette ligne pointée est une première ligne du gabarit 344a. Le module de calcul 21 détermine la longueur attendue à chaque position pointée. Le contour comprend une deuxième ligne 344b, la distance entre les deux lignes le long de l'axe des distances est variable le long du premier axe. Cette distance est égale aux coordonnées des positions respectives selon le premier axe, aux longueurs attendues calculées pour les positions pointées. Sur la figure 10, la première ligne étant parallèle au premier axe, la distance oblique entre chaque position pointée au sol et le sonar est fixe. Or, la distance entre les lignes 334a, 344b varie le long du premier axe, en fonction de la coordonnée selon le premier axe. Cela signifie que la hauteur du sonar par rapport au sol et/ou que l'altitude du fond et/ou que la pente du fond varient le long du premier axe. Ce mode de réalisation permet à un opérateur de voir, sans que l'opérateur n'ait à déplacer le curseur, si des images d'ombres situées le long du premier axe sont issues d'un objet de hauteur similaire à celle de l'objet recherché. Ce mode de réalisation permet donc d'augmenter la rapidité de traitement des images par un opérateur lors de l'étape de détection. Par exemple, sur la figure 10, la deuxième ombre 220 coïncide avec les limites du gabarit 342 alors que le première ombre 219 présente une longueur nettement supérieure au gabarit, elle n'est donc pas issue d'un objet de taille similaire à celle de l'objet recherché. En variante, le gabarit représenté sur la figure 10 pourrait être décentré.

Dans ce mode de réalisation, le curseur est mobile uniquement selon l'axe des distances alors qu'il est mobile selon les deux axes dans les autres exemples.

En variante, le gabarit est un segment de droite s'étendant le long de l'axe des distances d, c'est-à-dire le long d'une bande élémentaire, et présentant une longueur égale à la longueur attendue. La longueur du segment s'adapte à la position pointée par le curseur.

Avantageusement, l'interface homme-machine 22 permet à un opérateur de choisir une forme et/ou un agencement et/ou un nombre de gabarits à afficher sur l'écran.

Nous avons décrit l'invention dans le cas d'images issues d'un dispositif d'imagerie à visée latérale s'étendant dans un repère orthogonal. Dans l'exemple décrit, chaque bande élémentaire Bi est une représentation des intensités des échos générés depuis une zone d'observation élémentaire ZOi sous l'effet d'une impulsion d'onde incidente et mesurés par la formation d'une unique voie de réception élémentaire. En variante, chaque bande élémentaire Bi est une représentation des intensités d' échos générés depuis une zone d'observation élémentaire ZOi sous l'effet d'une pluralité d'impulsions d'ondes et mesurés par la formation d'une unique voie de réception élémentaire. Autrement dit, chaque voie élémentaire est formée à partir des échos générés dans une zone observée élémentaire sous l'effet d'une pluralité d'impulsions d'ondes élémentaires.

L'invention s'applique également à des images issues d'un dispositif d'imagerie de type volumique réalisant une image d'une zone observée du sol en émettant une unique impulsion d'ondes incidente vers le sol et en mesurant les échos réfléchis en formant une pluralité de voies de réception élémentaires. Chaque voie de réception élémentaire image une zone observée élémentaire représentée sur l'image par une bande élémentaire Bj comme représenté sur la figure 11. C'est par exemple le cas d'un sonar frontal. L'image obtenue 412 est une image du type gisement-distance.

Un exemple d'une forme d'image du type gisement-distance est représentée sur la figure 11. L'image a la forme d'une portion de couronne mais peut aussi avoir la forme d'un cône. Dans ce cas, le premier et le deuxième axes forment un repère polaire. Le premier axe est un axe de gisement, c'est un axe angulaire. Il présente avantageusement la forme d'un arc. L'axe des distances est un axe radial. Dans le cas où le gabarit 442 comprend un contour fermé délimitant 444 une zone 443 dans laquelle doit se trouver une image d'une ombre présentant une longueur égale à la longueur attendue, les premières et deuxièmes lignes 445, 446 du contour parallèles au premier axe sont des arcs parallèles et espacés l'un de l'autre de la longueur attendue. Les troisième et quatrième lignes 447, 448 délimitant l'ombre attendue selon l'axe de gisement sont des portions de rayons de cercle de centre O. Le gabarit 442 peut également avoir la forme d'un segment de droite présentant la longueur attendue et s'étendant selon le rayon de cercle passant par la position pointée. En variante, le repère gisement distance pourrait être orthogonal.

Dans la demande de brevet nous avons appelé longueur du gabarit, la taille du gabarit selon l'axe des distances d, elle peut être plus longue ou plus courte que la taille du gabarit, que nous avons appelée largeur, selon le premier axe.

## Revendications

1.  Dispositif d'aide à la détection d'un objet recherché sur le sol, ledit objet ayant une première hauteur h prédéterminée, ledit dispositif comprenant :

    - un dispositif d'affichage (10) configuré pour afficher une image (12) sur un écran (11), l'image (12) étant générée à partir d'échos mesurés par un dispositif d'imagerie par réflexion d'ondes (13), l'image (12) représentant des intensités d'échos générés par une zone observée du sol (5) sous l'effet de l'émission d'au moins une impulsion d'ondes vers la zone observée du sol (5), l'image s'étendant au moins selon un axe des distances (d) représentant les distances obliques (do) séparant le dispositif d'imagerie réflexion d'ondes (13) de réflecteurs ayant généré les échos, l'image (12) ayant une résolution en distance prédéterminée p, le dispositif d'affichage (10) permettant d'afficher un curseur (14) superposé à ladite image sur ledit écran (11), ledit curseur (14) permettant de pointer au moins une position pointée (P) sur l'image (12),
    - une interface homme-machine (22) comprenant un pointeur (23) permettant à un opérateur de déplacer le curseur (14) sur l'image (12) au moins le long de l'axe des distances (d),
    - un module de calcul (21) configuré pour déterminer une longueur attendue w, le long de l'axe des distances (d), d'une ombre attendue (19, 20) projetée sur l'image (12) par l'objet recherché en considérant que l'objet recherché est positionné à une position pointée au sol (PS) correspondant à la position de la zone observée associée à la position pointée (P) par le curseur (14), le curseur (14) comprenant au moins un gabarit (142) de l'ombre attendue, le gabarit (142) étant dimensionné et agencé de façon à permettre à un opérateur de vérifier qu'une ombre projetée sur l'image (12) dans le voisinage de la position pointée (P) présente la longueur attendue selon l'axe des distances (d).

2.  Dispositif selon la revendication précédente, dans lequel la longueur attendue est calculée à partir de la première hauteur h, à partir d'une distance oblique séparant le sonar de la position pointée au sol (PS) et d'une deuxième hauteur H dépendant d'une altitude Hp du dispositif d'imagerie (13) au-dessus du sol.

3.  Dispositif selon la revendication 2, dans lequel la deuxième hauteur est une altitude Hp du dispositif d'imagerie au-dessus du sol.

4.  Dispositif selon l'une quelconque des revendications 2 à 3, dans laquelle la deuxième hauteur H est fixe.

5.  Dispositif selon l'une quelconque des revendications 2 à 4, dans laquelle la deuxième hauteur dépend en outre d'une différence d'altitude entre la zone du sol située à l'aplomb du dispositif d'imagerie et la position pointée au sol (PS).

6.  Dispositif selon l'une quelconque des revendications 2 à 5, dans lequel la longueur attendue w est en outre déterminée à partir d'une pente du sol b dans le voisinage de la position pointée au sol.

7.  Dispositif selon la revendication précédente, dans lequel la longueur attendue est déterminée à partir de l'équation suivante :

$$w = \frac{h\rho}{\sin(\alpha - b)}$$

où $\alpha = \arcsin(\dfrac{H}{r})$ et où p est la résolution de l'image en distance, H est la deuxième hauteur et r est la distance oblique séparant le dispositif d'imagerie et la position pointée au sol.

8. Dispositif selon l'une quelconque des revendications précédentes, dans lequel le dispositif d'affichage permet de représenter le gabarit (142) par une première forme dans laquelle le gabarit comprend un contour (144) délimitant une zone présentant une longueur sensiblement égale à la longueur attendue selon l'axe des distances.

9. Dispositif selon l'une quelconque des revendications précédentes, dans lequel le dispositif d'affichage permet de représenter le gabarit selon un premier agencement dans lequel le gabarit est centré sur la position pointée (P) selon l'axe des distances (d).

10. Dispositif selon l'une quelconque des revendications 1 à 8, dans lequel le dispositif d'affichage permet de représenter le gabarit selon un deuxième agencement dans lequel une extrémité du gabarit selon l'axe des distances coïncide avec la position pointée.

11. Dispositif selon l'une quelconque des revendications 8 à 10, dans lequel le contour est fermé.

12. Dispositif selon l'une quelconque des revendications 1 à 11, dans lequel l'image s'étend selon un premier axe et selon l'axe des distances, le dispositif d'affichage permet de représenter le gabarit selon un mode dans lequel le curseur pointe une pluralité de positions pointées, l'ensemble des positions pointées étant réparties sur une ligne parallèle au premier axe, appelée ligne pointée, le module de calcul (21) déterminant la longueur attendue auxdites positions pointées, le gabarit comprenant un contour, le contour comprenant une première ligne parallèle à la ligne pointée, le contour comprenant une deuxième ligne, la distance entre la première ligne et la deuxième ligne selon l'axe des distances étant variable et égale, aux coordonnées des positions pointées respectives selon le premier axe, aux longueurs attendues calculées pour les positions pointées respectives.

13. Dispositif selon l'une quelconque des revendications précédentes, dans lequel l'image est réalisée à partir de mesures issues d'un dispositif d'imagerie par réflexion d'ondes à visée latérale monté sur un porteur, l'image comprenant une juxtaposition de bandes élémentaires représentant des échos issus de zones observées élémentaires mesurées par formation de voies de réception élémentaires respectives, les échos étant générés sous l'effet d'émissions d'impulsions d'ondes successives pendant l'avancement du porteur.

14. Dispositif selon la revendication précédente, dans lequel l'image est réalisée à partir de mesures issues d'un dispositif d'imagerie par réflexion d'ondes de type volumique, l'image comprenant une juxtaposition de bandes élémentaires représentant des échos issus de zones observées élémentaires mesurées par formation de voies de réception élémentaires respectives, les échos étant générés sous l'effet de l'émission d'une impulsion d'ondes.

15. Dispositif pour détecter des objets au sol comprenant un dispositif d'imagerie par réflexion d'ondes et un dispositif d'aide à la détection selon l'une quelconque des revendications précédentes.


**Patentansprüche**

1. Vorrichtung zum Helfen bei der Erkennung eines gesuchten Objekts am Boden, wobei das Objekt eine vorbestimmte erste Höhe h hat, wobei die Vorrichtung Folgendes umfasst:

- eine Anzeigevorrichtung (10), konfiguriert zum Anzeigen eines Bildes (12) auf einem Bildschirm (11), wobei das Bild (12) auf der Basis von Echos erzeugt wird, die von einer Bildgebungsvorrichtung durch Wellenreflexion (13) gemessen werden, wobei das Bild (12) Intensitäten von Echos darstellt, die von einer beobachteten Zone des Bodens (5) unter der Wirkung der Emission von mindestens einem Wellenimpuls in Richtung der beobachteten Zone des Bodens (5) erzeugt werden, wobei sich das Bild mindestens gemäß einer Achse von Distanzen (d) erstreckt, die die schrägen Distanzen (do) repräsentieren, die die Bildgebungsvorrichtungswellenreflexionen (13) von Reflektoren trennen, die die Echos erzeugt haben, wobei das Bild (12) eine vorbestimmte Distanzauflösung p hat, wobei es die Anzeigevorrichtung (10) zulässt, einen Cursor (14) auf dem Bild auf dem Bildschirm (11) überlagert anzuzeigen, wobei der Cursor (14) das Zeigen auf mindestens eine angezeigte Position (P) auf dem Bild (12) zulässt,

- eine Mensch-Maschine-Schnittstelle (22), die einen Zeiger (23) umfasst, der es einem Bediener gestattet, den Cursor (14) auf dem Bild (12) mindestens entlang der Achse der Distanzen (d) zu bewegen,
- ein Rechenmodul (21), konfiguriert zum Bestimmen einer erwarteten Länge w entlang der Achse der Distanzen (d) eines erwarteten Schattens (19, 20), von dem gesuchten Objekt auf das Bild (12) projiziert, unter Berücksichtigung, dass das gesuchte Objekt an einer angezeigten Position am Boden (PS) entsprechend der Position der beobachteten Zone positioniert ist, die mit der von dem Cursor (14) angezeigten Position (P) assoziiert ist, wobei der Cursor (14) mindestens eine Schablone (142) des erwarteten Schattens umfasst, wobei die Schablone (142) so dimensioniert und ausgestattet ist, dass sie es einem Bediener erlaubt zu verifizieren, dass ein auf das Bild (12) in der Nähe der angezeigten Position (P) projizierter Schatten die erwartete Länge gemäß der Achse von Distanzen (d) aufweist.

2. Vorrichtung nach dem vorherigen Anspruch, wobei die erwartete Länge auf der Basis der ersten Höhe h, auf der Basis einer schrägen Distanz, die das Sonar der angezeigten Position am Boden (PS) trennt, und einer zweiten Höhe H in Abhängigkeit von einer Höhenlage Hp der Bildgebungsvorrichtung (13) über dem Boden berechnet wird.

3. Vorrichtung nach Anspruch 2, wobei die zweite Höhe eine Höhenlage Hp der Bildgebungsvorrichtung über dem Boden ist.

4. Vorrichtung nach einem der Ansprüche 2 bis 3, wobei die zweite Höhe H fest ist.

5. Vorrichtung nach einem der Ansprüche 2 bis 4, wobei die zweite Höhe ferner von einer Höhenlagendifferenz zwischen der lotrecht zur Bildgebungsvorrichtung befindlichen Zone des Bodens und der gezeigten Position am Boden (PS) abhängig ist.

6. Vorrichtung nach einem der Ansprüche 2 bis 5, wobei die erwartete Länge w ferner auf der Basis eines Gefälles des Bodens b in der Nähe der angezeigten Position am Boden bestimmt wird.

7. Vorrichtung nach dem vorherigen Anspruch, wobei die erwartete Länge auf der Basis der folgenden Gleichung bestimmt wird:

$$w = \frac{h\rho}{\sin(\alpha - b)}$$

wobei $\alpha = \arcsin(\frac{H}{r})$ und wobei p die Auflösung des Bildes in der Distanz ist, H die zweite Höhe ist und r die schräge Distanz ist, die die Bildgebungsvorrichtung und die angezeigte Position am Boden trennt.

8. Vorrichtung nach einem der vorherigen Ansprüche, wobei die Anzeigevorrichtung es zulässt, die Schablone (142) durch eine erste Form darzustellen, in der die Schablone eine Kontur (144) umfasst, die eine Zone begrenzt, die eine Länge im Wesentlichen gleich der erwarteten Länge gemäß der Achse der Distanzen aufweist.

9. Vorrichtung nach einem der vorherigen Ansprüche, wobei die Anzeigevorrichtung es zulässt, die Schablone gemäß einer ersten Anordnung darzustellen, in der die Schablone auf der angezeigten Position (P) gemäß der Achse der Distanzen (d) zentriert ist.

10. Vorrichtung nach einem der Ansprüche 1 bis 8, wobei die Anzeigevorrichtung es zulässt, die Schablone gemäß einer zweiten Anordnung darzustellen, in der ein Ende der Schablone gemäß der Achse der Distanzen mit der angezeigten Position übereinstimmt.

11. Vorrichtung nach einem der Ansprüche 8 bis 10, wobei die Kontur geschlossen ist.

12. Vorrichtung nach einem der Ansprüche 1 bis 11, wobei sich das Bild gemäß einer ersten Achse und gemäß der Achse der Distanzen erstreckt, die Anzeigevorrichtung es zulässt, die Schablone gemäß einem Modus darzustellen, in dem der Cursor auf eine Vielzahl von angezeigten Positionen zeigt, wobei alle angezeigten Positionen auf einer Linie parallel zur ersten Achse, angezeigte Linie genannt, verteilt sind, wobei das Rechenmodul (21) die erwartete Länge an den angezeigten Positionen bestimmt, wobei die Schablone eine Kontur umfasst, wobei die Kontur eine erste Linie parallel zur angezeigten Linie umfasst, wobei die Kontur eine zweite Linie umfasst, wobei die Distanz zwischen der ersten Linie und der zweiten Linie gemäß der Achse der Distanzen variabel und gleich den Koordinaten der jeweiligen angezeigten Positionen auf der ersten Achse, den berechneten erwarteten Längen für die jeweiligen angezeigten Positionen ist.

13. Vorrichtung nach einem der vorherigen Ansprüche, wobei das Bild auf der Basis von Messwerten realisiert wird, die von einer an einem Träger montierten Bildgebungsvorrichtung mit seitlich gerichteter Wellenreflexion kommen, wobei das Bild eine Nebeneinanderstellung von elementaren Bändern umfasst, die Echos von gemessenen beobachteten elementaren Zonen durch Bildung von jeweiligen elementaren Empfangskanälen repräsentieren, wobei die Echos unter dem Effekt von aufeinanderfolgenden Wellenimpulsemissionen bei der Fortbewegung des Trägers erzeugt werden.

14. Vorrichtung nach dem vorherigen Anspruch, wobei das Bild auf der Basis von Messwerten realisiert wird, die von einer Bildgebungsvorrichtung durch Wellenreflexion des Volumentyps ausgegeben werden, wobei das Bild eine Nebeneinanderstellung von elementaren Bändern umfasst, die Echos von gemessenen elementaren beobachteten Zonen durch Bildung von jeweiligen elementaren Empfangskanälen repräsentieren, wobei die Echos unter dem Effekt der Emission eines Wellenimpulses erzeugt werden.

15. Vorrichtung zum Erkennen von Objekten am Boden, umfassend eine Bildgebungsvorrichtung durch Wellenreflexion und eine Vorrichtung zum Helfen beim Erkennen nach einem der vorherigen Ansprüche.

**Claims**

1. A device for assisting with the detection of a sought object on the ground, said object having a first pre-determined height h, said device comprising:

- a display device (10) configured to display an image (12) on a screen (11), the image (12) being generated from echoes measured by a wave reflection imaging device (13), the image (12) representing intensities of echoes generated by an observed zone of the ground (5) under the effect of the emission of at least one wave pulse toward the observed zone of the ground (5), the image extending at least along a distance axis (d) representing the oblique distances (do) separating the wave reflection imaging device (13) from reflectors that have generated the echoes, the image (12) having a pre-determined distance resolution $\rho$, the display device (10) allowing a cursor (14) to be displayed superposed on said image on said screen (11), said cursor (14) making it possible to designate at least one designated position **(P)** on the image (12),
- a human-machine interface (22) comprising a pointer (23) allowing an operator to move the cursor (14) over the image (12) at least along the distance axis (d),
- a computational module (21) configured to determine an expected length w along the distance axis (d) of an expected shadow (19, 20) projected over the image (12) by the sought object assuming that the sought object is positioned at a designated position on the ground (PS) corresponding to the position of the observed zone associated with the position (P) designated by the cursor (14), the cursor (14) comprising at least one gauge (142) of the expected shadow, the gauge (142) being dimensioned and arranged so as to allow an operator to verify that a shadow projected over the image (12) in the vicinity of the designated position (P) has the expected length along the distance axis (d).

2. The device according to the preceding claim, wherein the expected length is calculated from the first height h, from an oblique distance separating the sonar from the designated position on the ground (PS) and from a second height H dependent on an altitude Hp of the imaging device (13) above the ground.

3. The device according to Claim 2, wherein the second height is an altitude Hp of the imaging device above the ground.

4. The device according to any one of Claims 2 to 3, wherein the second height H is fixed.

5. The device according to any one of Claims 2 to 4, wherein the second height depends, furthermore, on a difference in altitude between the zone of the ground which is located directly below the imaging device and the designated position on the ground (PS).

6. The device according to any one of Claims 2 to 5, wherein the expected length w is furthermore determined from a slope b of the ground in the vicinity of the designated position on the ground.

7.  The device according to the preceding claim, wherein the expected length is determined on the basis of the following equation:

$$w = \frac{h\rho}{\sin(\alpha - b)}$$

where $\alpha = \arcsin(\frac{H}{r})$ and where p is the distance resolution of the image, H is the second height and r is the oblique distance separating the imaging device and the designated position on the ground.

8.  The device according to any of the preceding claims, wherein the display device allows the gauge (142) to be represented by a first shape in which the gauge comprises an outline (144) delimiting a zone that has a length substantially equal to the expected length along the distance axis.

9.  The device according to any one of the preceding claims, wherein the display device allows the gauge to be represented in a first arrangement in which the gauge is centred on the designated position (P) along the distance axis (d).

10. The device according to any one of Claims 1 to 8, wherein the display device allows the gauge to be represented in a second arrangement in which one end of the gauge along the distance axis coincides with the designated position.

11. The device according to any one of Claims 8 to 10, wherein the outline is closed.

12. The device according to any one of Claims 1 to 11, wherein the image extends along a first axis and along the distance axis, the display device allows the gauge to be represented in a mode in which the cursor designates a plurality of designated positions, all of the designated positions being distributed over a line parallel to the first axis, referred to as the designated line, the computational module (21) determining the expected length at said designated positions, the gauge comprising an outline, the outline comprising a first line parallel to the designated line, the outline comprising a second line, the distance between the first line and the second line along the distance axis being variable and equal, at the coordinates of the respective designated positions along the first axis, to the expected lengths calculated for the respective designated positions.

13. The device according to any one of the preceding claims, wherein the image is produced from measurements issued from a side-looking wave reflection imaging device mounted on a carrier, the image comprising a juxtaposition of elementary bands representing echoes issued from elementary observed zones measured by forming respective elementary reception channels, the echoes being generated under the effect of emissions of successive wave pulses as the carrier advances.

14. The device according to the preceding claim, wherein the image is produced from measurements issued from a volumetric-type wave reflection imaging device, the image comprising a juxtaposition of elementary bands representing echoes issued from elementary observed zones measured by forming respective elementary reception channels, the echoes being generated under the effect of the emission of a wave pulse.

15. The device for detecting objects on the ground comprising a wave reflection imaging device and a detection assisting device according to any of the preceding claims.

FIG.1

FIG.2

EP 3 028 255 B1

Interface Homme-Machine

Moyens pour fournir h

Pointeur

Dispositif d'affichage

Ecran

Image

Dispositif d'imagerie

Module de calcul

Mémoire

FIG.3

FIG.4

FIG.5

FIG.6

FIG.7

FIG.8

FIG.9

FIG.10

FIG.11

**EP 3 028 255 B1**

## RÉFÉRENCES CITÉES DANS LA DESCRIPTION

**Documents brevets cités dans la description**

- US 2013004017 A

- US 6756934 B